(19) Europäisches Patentamt

European Patent Office

Office européen des brevets

(11) **EP 0 931 813 A1**

(12) **EUROPEAN PATENT APPLICATION**
published in accordance with Art. 158(3) EPC

(43) Date of publication:
28.07.1999 Bulletin 1999/30

(21) Application number: 97929511.0

(22) Date of filing: 03.07.1997

(51) Int. Cl.[6]: **C08L 21/00**, C08K 3/36,
C08K 3/04, F16F 1/36,
F16F 15/08
// (C08L21/00, 45:02)

(86) International application number:
PCT/JP97/02309

(87) International publication number:
WO 98/16580 (23.04.1998 Gazette 1998/16)

(84) Designated Contracting States:
GB IT

(30) Priority: 14.10.1996 JP 27084196

(71) Applicant:
THE YOKOHAMA RUBBER CO., LTD.
Tokyo, 105-0004 (JP)

(72) Inventor:
OISHI, Hideyuki,
The Yokohama Rubber Co., Ltd
Kanagawa, Prefecture 245 (JP)

(74) Representative:
VOSSIUS & PARTNER
Siebertstrasse 4
81675 München (DE)

(54) **HIGHLY DAMPING RUBBER COMPOSITION**

(57) A highly damping rubber composition having a small elastic modulus and good damping performance, breakage characteristics and the like is provided, which comprises a petroleum resin (15 to 60 parts weight) and a fine grain carbon black and silica, a sum of which amounts to 60 to 95 parts weight, the three components being blended in rubber (100 parts weight) containing a natural rubber and/or isoprene rubber (at least 50 parts weight), a part weight ratio of the fine grain carbon black to silica being in the range of 95/5 to 75/25.

EP 0 931 813 A1

## Description

TECHNICAL FIELD

This invention relates to a rubber composition which exhibits low modulus as well as high damping capacity.

BACKGROUND ART

Seismic energy absorption systems, namely, seismic resistant systems, seismic resisting systems, and seismic isolation systems have recently come into widespread use, and seismic isolation rubber systems comprising alternately laminated rubber composition and rigid plate are used for bridge bearings and building base isolation. The seismic isolation rubber system is a system wherein the alternately laminated rubber composition and rigid plates exhibit reduced shear rigidity by being very hard in the vertical direction and flexible in the horizontal direction. Such seismic isolation rubber system functions to displace the vibration cycle intrinsic to the building from the seismic cycle to thereby remarkably reduce the acceleration applied to the building in the earthquake. The rubber composition used for such purpose is required to have high damping capacity so that the vibration is converted into heat to thereby damp the seismic energy, and such damping capacity is generally realized by blending fine particle carbon and resins in large amounts.

In the case of the seismic isolator used for seismic isolation of a building or a house, the seismic isolator is required to exhibit not only the high damping capacity but also a modulus corresponding to the particular building or house. Preferably, the modulus required is relatively low since damage (for example, damages in human being, machines and machinery) inside the housing can be minimized if the cycle of the shaking in the earthquake is prolonged, namely, by slowing down the shaking. A typical means for reducing the modulus to the level required in the seismic isolation of the individual building or house is adjustment of the rubber composition, for example, reduction in the amount of fine particle or vulcanizing agent (sulfur) incorporated.

The reduction in the amount of the fine particle carbon, however, also results in the reduction of the damping capacity, and reduction in the amount of vulcanizing agent (sulfur) invites decrease in crosslinking density, and hence, decrease in breakage strength and increase in creep. It has been quite difficult to realize the reduction of the modulus, high damping capacity, sufficient breakage strength, and the like at once in good balance.

In view of such situation, an object of the present invention is to provide a rubber composition which exhibits low modulus as well as high damping capacity and high breakage resistance.

SUMMARY OF THE INVENTION

The inventors of the present invention have found that the required low modulus can be realized without sacrificing the damping capacity if the carbon incorporated in the high damping rubber is partly replaced with silica. The present invention has been completed on the bases of such finding. According to the present invention, there is provided a high damping rubber composition wherein the rubber content comprises 50 parts by weight or more of natural rubber and/or isoprene rubber, characterized in that: the composition contains 15 to 60 parts by weight of petroleum resin and 60 to 95 parts by weight of fine particle carbon black and silica in total, per 100 parts by weight of the rubber content; and ratio in parts by weight of the fine particle carbon black to the silica is in the range of 95/5 to 75/25.

brief description of the drawings

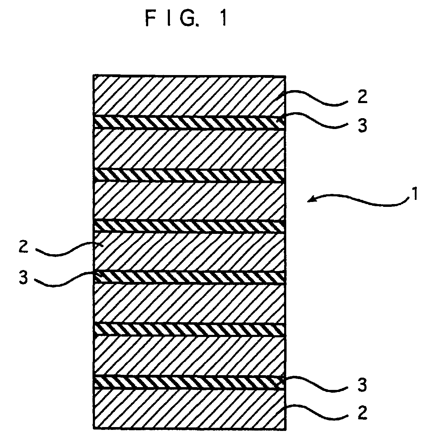

FIG. 1 is a view of an embodiment of a seismic isolation laminate wherein the high damping rubber composition of the present invention is employed.

Preferred Embodiments for Carrying Out the Invention

The present invention is hereinafter described in further detail.

The rubber composition of the present invention comprises a rubber matrix having uniformly dispersed therein a predetermined amount of petroleum resin, fine particle carbon and silica.

Such rubber composition is produced by blending the petroleum resin, the fine particle carbon, a vulcanizing agent and the like in unvulcanized rubber; shaping the composition into the desired shape; and heating and vulcanizing the composition.

The components used are as described below.

Rubber

At least natural rubber (NR) or isoprene rubber (IR) is used as the unvulcanized rubber in the production of the present composition. The natural rubber (NR) and the isoprene rubber (IR) may be used in combination. The natural rubber (NR) and/or the isoprene rubber (IR) is blended in an amount of 50 parts by weight or more per 100 parts by weight of the total rubber content since the resulting product will suffer from insufficient workability and damping capacity when the content of such rubber components is less than 50 parts by weight.

Unvulcanized rubbers which may be blended in addition to the natural rubber (NR) and the isoprene rubber (IR) are not limited to any particular types, and exemplary such rubbers include butadiene rubber (BR), styrene-butadiene copolymer rubber (SBR), acrylonitrile-butadiene copolymer rubber (NBR), butyl rubber (II), halogenated butyl rubber (Br-IIR, CI-IIR, etc.), chloroprene rubber (CR) and the like.

Petroleum resin

Exemplary petroleum resins which may be used in the present invention include coumarone plastic produced by copolymerizing coumarone, indene and styrene in solvent naphtha; and resins produced by polymerizing non-isolated di-olefin and mono-olefin components of a cracked oil fraction produced as a byproduct in steam cracking of petroleum or the like in an ethylene plant where ethylene, propylene and the like are produced. Petroleum resins are commercially available as Escrone (manufactured by Nippon Steel Chemical Co., Ltd.), Hi-resin (manufactured by Toho Chemical Industry Co., Ltd.), FTR (manufactured by Mitsui Petrochemical Industries Ltd.), and the like.

The petroleum resin is used in an amount of 15 to 60 parts by weight, and preferably in an amount of 25 to 55 parts by weight per 100 parts by weight of the total rubber content. The petroleum resin of less than 15 parts by weight is insufficient in improving the damping capacity, and the petroleum resin in excess of 60 parts by weight results in an unduly increased creep.

Fine particle carbon and silica

One characteristic feature of the rubber composition of the present invention is its inclusion of the fine particle carbon in combination with the silica.

The fine particle carbon which may be used in the rubber composition of the present invention may be any carbon black which is commonly used in the art. The fine particle carbon, however, is preferably the one having a specific surface area by nitrogen adsorption of 60 to 150 $m^2/g$, and particularly 80 to 150 $m^2/g$, and DBP oil absorption of 60 to 160 $cm^3/100g$, and particularly 90 to 160 $cm^3/100g$. Such carbon black is commercially available as carbon black of the grade HAF, ISAF, or SAF as defined by ASTM, and the purchased carbon black may be used in the production.

The specific surface area by nitrogen adsorption may be measured by the method described in ASTM D3037-89, namely, by the method wherein the particle diameter is determined by the amount of the nitrogen gas adsorption.

Incorporation of the fine particle carbon is necessary for the rubber composition of the present invention in expressing the seismic energy-absorbing capability. Incorporation of an excessively small amount of the fine particle carbon is insufficient for improving the absorbing capability, while addition of an excessive amount result in unduly poor workability and reduced strength.

The silica used in the present invention may be any silica of the grade commonly used in the rubber composition, and may be, for example, a precipitated silica, an amorphous silica such as high temperature-treated silica, or crystalline silica. An exemplary such silica is white carbon which is also referred to as finely divided silica. The white carbon used is not particularly limited, and may be finely divided silicic acid anhydride, silicic acid hydrate, calcium silicate, aluminum silicate, or the like. Such silica may preferably have an average aggregated particle diameter of 5 to 50 $\mu$m, and in particular, 5 to 30 $\mu$m. Examples of preferable silica are Nipsil AQ manufactured by Nippon Silica K.K. and Tokusil GU manuractured by Tokuyama Soda K.K.

The rubber composition of the present invention may preferably contain the fine particle carbon and the silica in total amount of 60 to 95 parts by weight, and in particular, 70 to 90 parts by weight per 100 parts by weight of total rubber content. Incorporation of less than 60 parts by weight is insufficient in improving the damping capacity, and incorporation in excess of 95 parts by weight results in unduly reduced workability and poor elongation.

The fine particle carbon and the silica are preferably used at a ratio in parts by weight of said fine particle carbon to said silica of 95/5 to 75/25, and more preferably, at a ratio of 93/7 to 80/20. The ratio in excess of 95/5 results in unduly high modulus, and the ratio of less than 75/25 results in an insufficient damping capacity.

Optional components

In the production of the vulcanized rubber composition of the present invention, the unvulcanized rubber may

3

have added thereto various optional components in addition to the critical components as described above. Examples of such optional components include vulcanizing agent such as sulfur, vulcanization aid such as zinc white and stearic acid, and anti-aging agent such as N-phenyl-N'-isopropyl-p-phenylenediamine.

After blending such additives in the unvulcanized rubber composition, the composition is shaped by an adequate means, and vulcanized at a temperature of 130 to 170°C by a known means in a known apparatus to obtain the vulcanized rubber composition.

FIG. 1 shows an embodiment of a seismic isolation laminate 1 prepared by using the rubber composition of the present invention. The seismic isolation laminate 1 comprises alternately disposed rubber composition of the present invention 2 and a rigid plate 3 such as a steel plate for general structural use or a cold rolled steel plate. For producing the seismic isolation laminate 1, a sheet-form rubber composition 2 is first produced by shaping and vulcanizing the rubber composition, and the thus produced sheet-form rubber composition 2 is then adhered to the rigid plate 3 by using an adhesive. Alternatively, the seismic isolation laminate 1 may be produced by forming sheet-form unvulcanized rubber composition, laminating the rubber sheets and the rigid plates 3, and thereafter heating the laminate for simultaneous vulcanization and adhesion.

The thus produced seismic isolation laminate can be adequately used for such applications as bearing of road bridges and base isolation of buildings.

Examples

Next, the present invention is described in further detail by referring to the Examples.

Examples 1 to 4 and Comparative Examples 1 to 4

Unvulcanized rubber composition was prepared by blending rubber components, carbon black, silica (white carbon) and coumarone resin of the amounts shown in Table 1, and 5.0 parts by weight of zinc white, 1.0 part by weight of stearic acid, 3.0 parts by weight of an anti-aging agent, 2.1 parts by weight of sulfur, and 1.2 parts by weight of CZ as vulcanization aid per 100 parts by weight of the rubber content. The rubber composition was pressed at 148°C for 45 minutes for vulcanization to thereby obtain a vulcanized rubber which is the high damping rubber of the present invention.

Evaluation of physical properties of the vulcanized rubber

The thus obtained vulcanized rubber was evaluated for the physical properties as described below. The results are shown in Table 1.

It should be noted that the evaluations of (d) to (f) were conducted after producing a seismic isolation laminate comprising alternately laminated rubber and steel sheets (size: 135 mm x 135 mm x 74 mm).

(a) Tensile strength ($T_B$)

Tensile strength was measured in accordance with JIS K 6301. Larger value corresponds to higher resistance to breakage.

(b) Elongation ($E_B$)

Elongation was measured in accordance with JIS K 6301. Larger value corresponds to larger elongation.

(c) JIS A hardness ($H_S$)

Hardness was measured in accordance with JIS K 6301. Larger value corresponds to higher hardness.

(d) Shear modulus (G)

Shear modulus at shear deformation of 150% was measured with a biaxial shear tester at 0.5 Hz.

(e) Vibration absorption properties ($h_{eq}$)

Vibration absorption was evaluated in terms of equivalent viscosity damping factor at a shear deformation of 150% by using a biaxial shear tester at 0.5 Hz, and the value of the equivalent viscosity damping factor is shown. The value is preferably at least 15% which is the value required for seismic isolation of a building or a house.

(f) Creep (%)

On the bases of vertical displacement of the seismic isolation system after application for 1000 hours of the vertical load corresponding to design bearing pressure stress intensity (60 kgf/cm$^2$) at the temperature + 20°C, creep after the design service period of the bridge was calculated from the equation (1):

$$\delta_{CR} = at^b \tag{1}$$

wherein $\delta_{CR}$ is the creep deformation (mm) of seismic isolation system;

t is the design service period (hour) of the bridge; and
a and b are creep constants respectively calculated by equations (2) and (3):

$$a = (\delta_{100})^2 / (\delta_{1000})^2 \tag{2}$$

$$b = \log (\delta_{1000}/\delta_{100}) \tag{3}$$

wherein $\delta_{100}$ is vertical displacement (mm) of the seismic isolation system after 100 hours, and
$\delta_{1000}$ is vertical displacement (mm) of the seismic isolation system after 1000 hours.

It should be noted that the creep after the design service period of the bridge calculated by equation (1) should be 5% or less of the total rubber thickness.
As clearly seen from the comparison between Example 1 and Comparative Example 1, the rubber composition of the present invention has enabled to reduce the shear modulus (G) while retaining the equivalent viscosity damping factor ($h_{eq}$) at the substantially same level by replacing the carbon black partly with silica.
It should also be noted that the creep of the rubber composition of the present invention was less than 5% of the total rubber thickness in both Examples and Comparative Examples.

Table 1

| | | | | | | | (Unit of the amount blended: part by weight) | |
|---|---|---|---|---|---|---|---|---|
| | Comp. Ex. 1 | Comp. Ex. 2 | Comp. Ex. 3 | Ex. 1 | Ex. 2 | Ex. 3 | Comp. Ex. 4 | Ex. 4 |
| NR | 70 | 70 | 70 | 70 | 70 | 70 | 70 | |
| IR | | | | | | | | 70 |
| BR | 30 | 30 | 30 | 30 | 30 | 30 | 30 | 30 |
| Carbon black of ISAF grade | 85 | 75 | 55 | 75 | 70 | 65 | 60 | 75 |
| White carbon | | | | 10 | 15 | 20 | 25 | 10 |
| Petroleum resin (Coumarone resin) | 35 | 35 | 35 | 35 | 35 | 35 | 35 | 35 |
| Basic physical properties | | | | | | | | |
| $T_B$ (kgf/cm$^2$) | 194 | 210 | 231 | 188 | 180 | 171 | 159 | 175 |
| $E_B$ (%) | 540 | 610 | 710 | 660 | 690 | 710 | 740 | 680 |
| $H_S$ (JIS A) | 82 | 76 | 65 | 80 | 80 | 79 | 80 | 79 |
| Seismic isolation properties | | | | | | | | |
| G (kgf/cm$^2$) | 11 | 9 | 6 | 6 | 6 | 6 | 6 | 6 |
| $h_{eq}$ (%) | 15.5 | 15 | 13 | 16 | 15.5 | 15 | 14 | 16 |

Industrial Utility

The high damping rubber composition of the present invention has a modulus which is lower than that of the conventional products having only carbon black incorporated therein. At the same time, the high damping rubber composition of the present invention has excellent damping capacity and breakage resistance. Therefore, the high damping rubber composition of the present invention is highly adapted for use in various seismic energy absorbing system including seismic isolation system, seismic resisting system and the like (and in particular, for use in the seismic isolation of a building or a house).

Claims

1.  A high damping rubber composition wherein the rubber content comprises 50 parts by weight or more of natural rubber and/or isoprene rubber, characterized in that

    the composition contains 15 to 60 parts by weight of petroleum resin and 60 to 95 parts by weight of fine particle carbon black and silica in total, per 100 parts by weight of the rubber content; and
    ratio in parts by weight of the fine particle carbon black to the silica is in the range of 95/5 to 75/25.

2.  A high damping rubber composition according to claim 1 wherein said petroleum resin is at least one compound selected from the group consisting of coumarone plastic and a resin produced by polymerizing non-isolated di-olefin and mono-olefin components of a cracked oil fraction generated as a byproduct in steam cracking of petroleum or the like in an ethylene plant.

3.  A high damping rubber composition according to claim 1 or 2 wherein said fine particle carbon black has a specific surface area by nitrogen adsorption of 60 to 150 m$^2$/g and DBP oil absorption of 60 to 160 cm$^3$/100g.

4.  A high damping rubber composition according to claim 1 or 2 wherein said fine particle carbon black has a specific surface area by nitrogen adsorption of 80 to 150 m$^2$/g and DBP oil absorption of 90 to 160 cm$^3$/100g.

5. A high damping rubber composition according to any one of claims 1 to 4 wherein said silica is white carbon having an average aggregated particle diameter of 5 to 50 $\mu$m.

6. A high damping rubber composition according to any one of claims 1 to 4 wherein said silica is white carbon having an average aggregated particle diameter of 5 to 30 $\mu$m.

7. A high damping rubber composition according to any one of claims 1 to 6 wherein content of said petroleum resin is 25 to 55 parts by weight per 100 parts by weight of the rubber content.

8. A high damping rubber composition according to any one of claims 1 to 6 wherein total content of said fine particle carbon black and said silica is 70 to 90 parts by weight per 100 parts by weight of the rubber content.

9. A high damping rubber composition according to any one of claims 1 to 8 wherein ratio in parts by weight of said fine particle carbon black to said silica is in the range of 93/7 to 80/20.

F I G. 1

## INTERNATIONAL SEARCH REPORT

| | International application No. |
|---|---|
| | PCT/JP97/02309 |

**A. CLASSIFICATION OF SUBJECT MATTER**
Int. Cl$^6$ C08L21/00, C08K3/36, C08K3/04, F16F1/36, F16F15/08 //
(C08L21/00, C08L45:02)

According to International Patent Classification (IPC) or to both national classification and IPC

**B. FIELDS SEARCHED**

Minimum documentation searched (classification system followed by classification symbols)
Int. Cl$^6$ C08L21/00, C08L45/02, C08K3/36, C08K3/04, F16F1/36, F16F15/08

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 6-57036, A (Toyo Tire & Rubber Co., Ltd.), March 1, 1994 (01. 03. 94), Claim; Table 1 (Family: none) | 1, 2, 7-9 |
| Y | JP, 6-57036, A (Toyo Tire & Rubber Co., Ltd.), March 1, 1994 (01. 03. 94), Claim; Table 1 (Family: none) | 3, 4, 7-9 |
| Y | JP, 5-262918, A (Yokohama Rubber Co., Ltd.), October 12, 1993 (12. 10. 93), Claim (Family: none) | 3, 4, 7-9 |
| Y | JP, 4-212844, A (Sumitomo Rubber Industries, Ltd.), August 4, 1992 (04. 08. 92), Claim & EP, 481810, B1 & US, 5128395, A | 3, 4, 7-9 |
| A | JP, 7-126437, A (Toyo Tire & Rubber Co., Ltd.), May 16, 1995 (16. 05. 95), Claim (Family: none) | 1 - 9 |

| [X] Further documents are listed in the continuation of Box C. | [ ] See patent family annex. |
|---|---|

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| September 18, 1997 (18. 09. 97) | September 30, 1997 (30. 09. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP97/02309

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP, 5-59220, A (Toyo Tire & Rubber Co., Ltd.), March 9, 1993 (09. 03. 93), Claim (Family: none) | 1 - 9 |

Form PCT/ISA/210 (continuation of second sheet) (July 1992)